# EUROPEAN PATENT APPLICATION

(11) **EP 1 734 288 A2**
(43) Date of publication of application: **20.12.2006**
(21) Application number: 06012251.2
(22) Date of filing: 14.06.2006
(51) Int. Cl.: F16H 48/08

(54) **Differential gearing for vehicle**

(30) Priority: 17.06.2005 JP 2005178579
(71) Applicant: JTEKT CORPORATION, Chuo-ku Osaka-shi Osaka 542-8502 (JP)
(72) Inventor: Nakajima, Shinichiro, Osaka-shi Osaka 542-8502 (JP)
(74) Representative: HOFFMANN EITLE

(57) **Abstract**

A plurality of pinion gears 4A, 4B which are rotatably held within a differential case 2, and a pair of left and right side gears 6L, 6R which are in meshing engagement with the pinion gears 4A, 4B and connected to left and right axles are provided. A ring 18A is fitted around the pinion gears 4A, 4B to prevent the pinion gears 4A, 4B from being withdrawn. The ring 18A has an inner peripheral surface in which a spherical recess 18Aa centered about a point of intersection between an axis of rotation of the side gears 6L, 6R and an axis of rotation of the pinion gears 4A, 4B is formed while an end of the pinion gears 4A, 4B which is disposed toward the outer periphery is formed with a spherical projection 4Ac having a similar curvature as the recess in the ring 18A.

## Description

### CROSS-REFERENCE TO RELATED APPLICATIONS

This application based upon and claims priority under 35 USC § 119 to Japanese patent application No. 2005-178579 filed on June 17, 2005, entire contents of which are incorporated herein by reference.

### BACKGROUND OF THE INVENTION AND RELATED ART STATEMENT

The present invention relates to a differential gearing for vehicle comprising a plurality of pinion gears which are rotatably held within a differential case and a pair of side gears disposed in meshing engagement with the pinion gears and connected to left and right axles, respectively, and in particular, to a differential gearing for vehicle in which a removal of the pinion gears is prevented by a ring which is fitted around the differential case.

A conventional differential gearing for vehicle is known as having a construction as disclosed in Japanese Utility Model No. 2520728, for example. This differential gearing for vehicle of the prior art will be briefly described with reference to Fig. 7. It is to be noted that reference characters for the conventional construction shown in Fig. 7 will be indicated in parentheses in this specification. Formed in a differential case (12) are a pinion gear receiving opening (14) and an axle receiving opening (16) which extend orthogonally to each other. Left and right side gears (20L, 20R) are disposed within the differential case (12) so as to be axially movable therein and are splined to left and right axles (22L, 22R). Thrust washers (24) of a smaller diameter than the side gears (20L, 20R) are disposed between the back surfaces (20La, 20Ra) of the left and right side gears (20L, 20R) and the internal surface of the differential case (12).

Also disposed within the differential case (12) and rotatably supported therein is a pinion gear (26) having substantially the same external diameter as the internal diameter of the pinion gear receiving opening (14). These pinion gears (26) are in meshing engagement with the left and right side gears (20L, 20R). A pinion gear holding plate (28) is fitted over the external diameter of the pinion gear (26), which is prevented from being removed from the differential case (12) by a snap ring (30) which is fitted into a groove (12a) in the differential case (12).

In the arrangement of the invention disclosed in the Utility Model, an end of the pinion gear (26) which is disposed toward the outer periphery is planar, and the pinion gear (26) may be displaced in position when a torque is transmitted to the differential case (12), and there is a likelihood that satisfactory meshing engagement with the side gears (20L, 20R) cannot be achieved. Because a pinion gear holding plate (28) must be fitted over the external diameter of each of the plurality of pinion gears (26) and must be locked against withdrawal by the snap ring (30), there remains a problem that the assembly is cumbersome.

### OBJECT AND SUMMARY OF THE INVENTION

Accordingly, it is an object of the present invention to provide a differential gearing for vehicle which achieves a satisfactory meshing engagement with side gears by suppressing a displacement of the pinion gears when a torque is transmitted to the differential case while facilitating the assembly.

Above object is accomplished by providing a differential gearing for vehicle comprising a plurality of pinion gears rotatably held in a pinion gear receiving opening formed in a differential case, and a pair of side gears disposed in right-angle meshing engagement with the pinion gears and connected to two axles which are coaxially disposed and in which a ring is fitted around the outer periphery of each pinion gear in coaxial relationship with the differential case and includes an inner peripheral surface in which a spherical recess centered about a point of intersection between an axis of rotation of the side gear and an axis of rotation of the pinion gear is formed while an end of the pinion gear which is disposed toward the outer periphery is formed with a spherical projection having a similar curvature as the recess in the inner peripheral surface of the ring.

When a torque is transmitted between the pinion gear and the side gear, the meshing engagement between the pinion gear and the side gear produces a force which urges the pinion gear axially outward. When the differential case rotates, a centrifugal force acts upon the pinion gear. In the differential gearing for vehicle according to the present invention, since the end of the pinion gear which is disposed toward the outer periphery is spherical, when the pinion gear is urged against the ring, there is developed a force which tends to return the pinion gear to its original position, thus allowing a degradation of the meshing engagement with the side gear to be suppressed as the pinion gear is displaced. Since a removal of the pinion gear is prevented by the ring which is fitted around the outer periphery of the respective pinion gears, the assembly is facilitated. The spherical recess formed in the inner peripheral surface of the ring facilitates its machining.

The invention defined in Claim 2 is characterized in that the ring is formed with an axial notch at a location which corresponds to the pinion gear receiving opening. By axially sliding the notch to be aligned with the location of the pinion gear after the pinion gear has been inserted into the pinion gear receiving opening, the ring is fitted around the outer periphery of the pinion gear.

According to this invention, because the ring is fitted by aligning the notch with the location of the pinion gear, the assembly is improved. When the location of the notch is aligned with the location of the external surface of the pinion gear, the heat dissipation from the external surface of the pinion gear and the sliding surface of the ring is improved, thus improving the seizure resistance.

The invention defined in Claim 3 is characterized in that after the ring is fitted around the outer periphery of the pinion gears, the ring is rotated relative to the differential case circumferentially and is locked against rotation with respect to the differential case.

With this construction, an area of sliding contact between the spherical external surface of the pinion gear and the pinion gear sliding surface can be increased than for the arrangement of Claim 2, permitting the abrasion to be reduced and allowing an aging change in a differential action limiting force to be suppressed.

The invention defined in Claim 4 is characterized in that the ring is formed with a diametrical opening at a location which corresponds to the pinion gear receiving opening. The pinion gear is inserted into the pinion gear receiving opening under a condition that the ring is fitted around the differential case so that the diametrical opening is aligned with the pinion gear receiving opening, and the ring is then circumferentially rotated relative to the differential case and is locked against rotation relative to the differential case.

According to this invention, the pinion gear is inserted after the ring is fitted around the differential case, facilitating the assembly.

### BRIEF DESCRIPTION OF THE DRAWINGS

Fig. 1 is a longitudinal section of a differential gearing for vehicle according to one embodiment of the invention taken along an axis of rotation thereof;
Fig. 2 is an illustration of a sliding contact between a ring 18A and pinion gears 4A, 4B;
Fig. 3 is a longitudinal section of a differential gearing for vehicle according to a second embodiment as taken along an axis of rotation;
Fig. 4 is a front view of a ring which prevents a withdrawal of a pinion gear in the differential gearing for vehicle;
Figs. 5A and 5B are illustrations of assembling steps for a ring which prevents a withdrawal of a pinion gear in a third embodiment;
Figs. 6A to 6C are illustrations of assembling steps for a ring which prevents a withdrawal of a pinion gear in a fourth embodiment; and

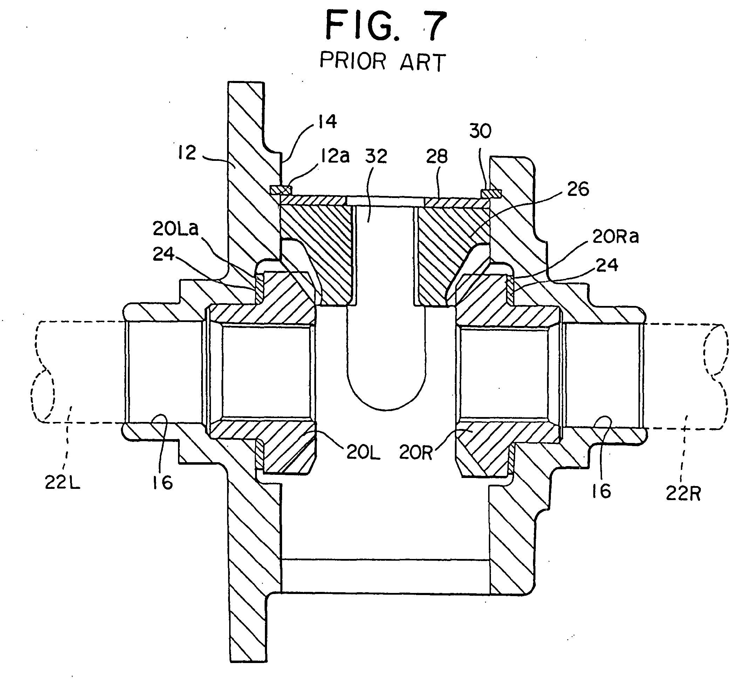

Fig. 7 is a longitudinal section of a conventional differential gearing for vehicle.

### DETAILED DESCRIPTION OF PREFERRED EMBODIMENTS

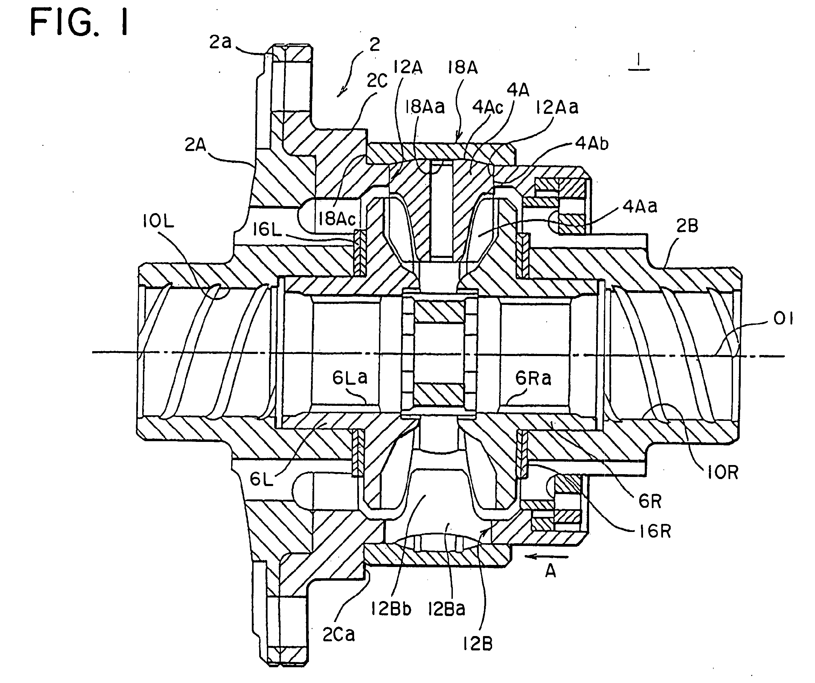

Several embodiments of the invention shown in the drawings will now be described. A differential gearing for vehicle 1 according to this embodiment includes a differential case 2 which is of a three-piece construction. A disk-shaped, first case 2A disposed to the left as viewed in Fig. 1, a cylindrical, second case 2B of a smaller diameter which is located to the right and a substantially cylindrical, third case 2C disposed therebetween are disposed in abutment against each other and are secured together as by bolts.

The differential gearing for vehicle 1 comprises two pinion gears 4A (one being not shown) which are rotatably held within the differential case 2, and a pair of left and right side gears 6L, 6R received within the differential case 2 and disposed to be in meshing engagement with the both pinion gears 4A simultaneously and connected to left and right axles (not shown) by splines 6La, 6Ra which are formed in their inner peripheral surfaces.

The differential case 2 is formed with axle receiving openings 10L, 10R extending through the axis thereof and in which left and right axles are passed, and pinion gear receiving openings 12A, 12B extending in a direction orthogonal to the axle receiving openings 10L, 10R and facing said internal space. The differential case 2 is formed with a flange 2a which is located in a plane which is orthogonal to an axis of rotation O1 of the differential gearing 1, and a torque from a drive pinion is input through a ring gear (not shown) which is mounted on the flange 2a.

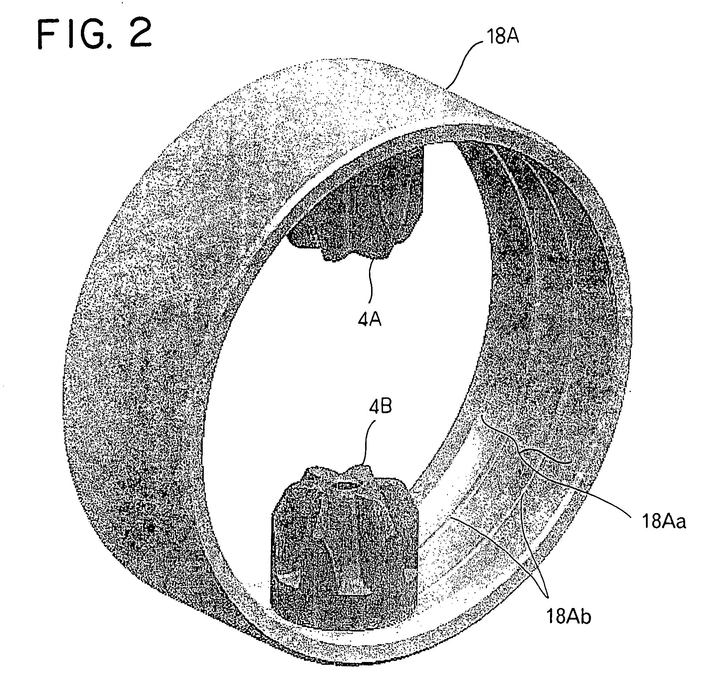

The pinion gear 4A includes a gear meshing portion 4Aa which meshes with the side gears 6L, 6R and which is inserted into the internal space within the differential case 2 through the pinion gear receiving opening 12A. A pinion gear receiving opening 12B is formed on the opposite side of the differential case 2 so as to oppose the pinion gear receiving opening 12A, and while not shown in Fig. 1, the pinion gear 4B (see Fig. 2) is rotatably held in the pinion gear receiving opening 12B. The pinion gears 4A, 4B include a carried portion 4Ab disposed toward the outer end which is rotatably carried by the inner peripheral surfaces (pinion gear holding surfaces) of the pinion gear receiving openings 12A, 12B. As indicated in the lower portion of Fig. 1, the internal surface of the pinion gear receiving openings 12A, 12B extends inward into the differential case 2 (the extension being indicated by character 12Bb) and the pinion gear holding surfaces (inner peripheral surfaces 12Aa, 12Ba of the pinion gear receiving openings 12A, 12B and the extensions 12Bb) support the pinion gears 4A, 4B including the carried portions 4Ab, 4Bb and part of the meshing portions 4Aa, 4Ba over an axially elongate extent of the pinion gears 4A, 4B. In this manner, a tilting of the pinion gears 4A, 4B during the transmission of a torque is prevented. It is to be noted that the pinion gears 4A, 4B do not include pinion pins which are usually fitted to extend through the axes thereof.

The side gears 6L, 6R which are received within the internal space of the differential case 2 for meshing engagement with the pinion gears 4A, 4B represent bevel gears of a larger size as compared with the pinion gears 4A, 4B, and have a number of teeth which is equal to or greater than 2.5 times the number of teeth of the pinion gears 4A, 4B, for example.

Thrust washers 16L, 16R are interposed between flat surfaces on the rear side of the both side gears 6L, 6R and the internal surface of the differential case 2. A withdrawal of the pinion gears 4A, 4B which are inserted into the pinion gear receiving openings 12A, 12B is prevented by a ring 18A which is fitted around the outer periphery of the pinion gears 4A, 4B. On its internal surface, the ring 18A includes a pinion gear sliding surface 18Aa, which is a spherical recess centered about a point of intersection between an axis of rotation of the side gears 6L, 6R and an axis of rotation of the pinion gears 4A, 4B, and thus these spherical surfaces are in sliding contact with spherical external surfaces 4Ac of the pinion gears 4A, 4B. The spherical external surface 4Ac has a curvature which is substantially equal to the curvature of the pinion gear sliding surface 18Aa.

Fig. 2 is an illustration of the ring 18A which prevents the withdrawal of the pinion gears and its contact with the pinion gears 4A, 4B while the detail such as the tooth surfaces of the pinion gears 4A, 4B are omitted from illustration. As shown in Fig. 2, the ring 18A is annular, having no notch or hiatus, and the pinion gear sliding surface 18Aa is circumferentially formed with two oil grooves 18Ab. The ring 18A is fitted around the outer periphery of the pinion gears 4A, 4B by axially sliding from one of directions of the axles of the differential case 2 (the right side as viewed in Fig. 1), but the ring 18A has an internal diameter at the opposite ends of the pinion sliding surface 18Aa which is less than the distance between the outer ends of the pinion gears 4A, 4B, and cannot be directly fitted around the outer periphery of the pinion gears 4A, 4B. For this reason, the ring 18A is heated to cause a thermal expansion, and after it is slid around the outer periphery of the pinion gears 4A, 4B, it is then cooled down to effect this fitting.

In the differential gearing for vehicle 1 according to this embodiment, the differential case 2 is constructed with three pieces 2A, 2B and 2C so as to permit an assembling from either side with an assembling procedure as mentioned below. Specifically, the side gears 6L, 6R and the thrust washers 16L, 16R are assembled into the central, third case 2C from the both sides, and then the first case 2A and the second case 2B are secured to the opposite sides of the central third case 2C. The pinion gears 4A, 4B are then inserted through the pinion gear receiving openings 12A, 12B, and then the heated ring 18A is slid in one of the directions of the axles in the differential case 2 (refer an arrow A shown in Fig. 1) to be cooled down over the pinion gears 4A, 4B. In the present embodiment, the third case 2C which is centrally located in the differential case 2 is formed with a step 2Ca adjacent to the pinion gear receiving openings 12A, 12B, and the end face 18Ac of the ring 18A is brought into abutment against the step 2Ca, thus positioning the ring 18A which is fitted over the differential case 2.

The operation of the differential gearing for vehicle 1 constructed in the manner mentioned above will be described. A torque from an engine is input to the differential case 2 through a drive pinion and a ring gear, both not shown, to cause it to rotate in either direction about the axis of rotation O1. The left and right side gears 6L, 6R are splined to the left and right axles (not shown) to transmit the torque thereto.

When left and right wheels experience an equal resistance, the input torque is transmitted to the differential case 2, whereby the two pinion gears 4A, 4B carried by the differential case 2 and the left and right side gears 6L, 6R which are in meshing engagement with the pinion gears 4A, 4B rotate integrally, transmitting an equal amount of torque to the both axles to cause left and right wheels to rotate.

When a vehicle is turning, to the left, for example, the left wheel experiences a greater resistance as compared with a right wheel, or when one of the wheels slips because of a wrong road condition, for example, when the right wheel is trapped in a mire, the right wheel experiences a less resistance. Under such condition, the left axle and the side gear 6L which experience a greater resistance rotate at a slower speed than the rotation of the differential case 2, and since the pinion gears 4A, 4B received in the pinion gear receiving openings 12A, 12B in the differential case 2 are rotatably carried therein to allow a rotation about their own axes by being carried by the pinion gear holding surfaces (the inner peripheral surfaces of the pinion gear receiving openings 12A, 12B and the extensions), the right side gear 6R and the axle which experience a less resistance rotate at a faster speed than the rotation of the differential case 2.

In this manner, the pinion gears 4A, 4B rotate by the influence of the force which is input from the ring gear (not shown) to be urged against the sliding surface 18Aa of the ring 18A, developing a frictional resistance. This frictional force limits a differential rotation between the left and right side gears 6L, 6R, and also limit a differential rotation between the left and right axles which are splined to the left and right side gears 6L, 6R. As the pinion gears 4A, 4B and the left and right side gears 6L, 6R rotate, a thrust force is developed at the meshing surfaces between the pinion gears 4A, 4B and the side gears 6L, 6R, urging the left side gear 6L to the left and urging the right side gear 6R to the right as viewed in Fig. 2. The movement of the respective side gears 6L, 6R causes the thrust washers 16L, 16R to be urged against the internal surface of the differential case 2, thus developing a frictional resistance. This frictional force limits a differential rotation between the left and right side gears 6L, 6R, and also limits a differential rotation between the left and right axles which are splined to the left and right side gears 6L, 6R. Thus thrust force which is developed at the meshing surfaces between the pinion gears 4A, 4B and the side gears 6L, 6R acts to urge the pinion gears 4A, 4B outward of the differential case 2, and a centrifugal force is developed upon the pinion gears 4A, 4B as the differential case 2 rotates. These forces develop a frictional resistance between the spherical external surface 4Ac of the pinion gear and the pinion gear sliding surface 18a, which limits a differential rotation between the left and right axles.

As mentioned above, in the differential gearing for vehicle according to this embodiment, the pinion gears 4A, 4B have spherical end faces 4Ac toward the outer periphery thereof, and a force which is developed in the axial direction of the pinion gears 4A, 4B by the meshing engagement with the side gears 6L, 6R and the centrifugal force produced by the rotation of the differential case 2 and acting upon the pinion gears 4A, 4B cause the spherical external surfaces 4Ac to be urged against the pinion gear sliding surface 18Aa of the ring 18A, thus developing a force which returns the pinion gears 4A, 4B to their original positions. For this reason, a degradation in the meshing engagement with the side gears 6L, 6R, which may be caused by a displacement of the pinion gears 4A, 4B, can be suppressed. Since the pinion gears 4A, 4B are locked against withdrawal by the annular ring 18A which is fitted around the outer periphery of the pinion gears 4A, 4B, the assembly is facilitated. In addition, because the pinion gear sliding surface 18Aa around the inner periphery of the ring 18A is spherical, its machining is facilitated. In addition, the spherical external surface 4Ac has a curvature which is substantially equal to the curvature of the pinion gear sliding surface 18Aa, and accordingly, a sliding area between these surfaces can be increased to reduce the abrasion, whereby an aging change in the differential action limiting force can be reduced.

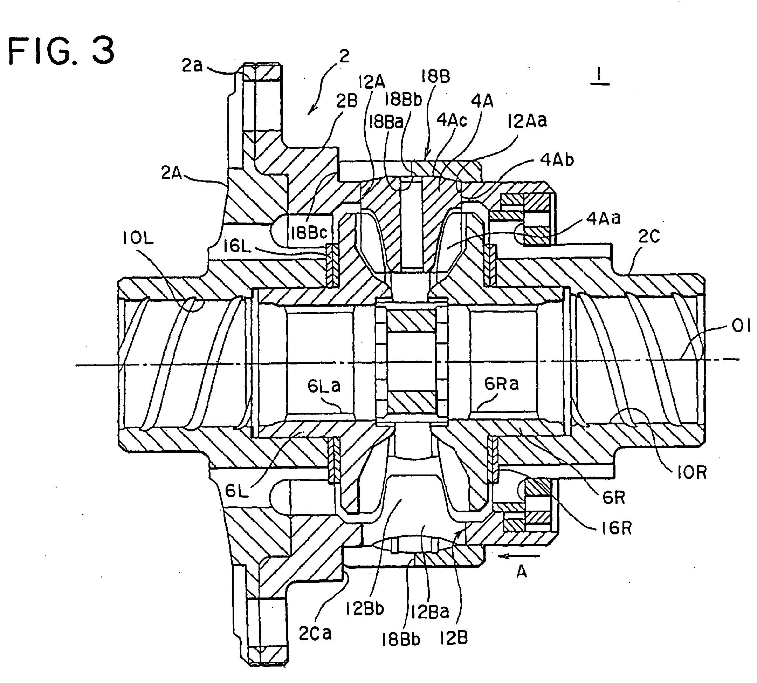

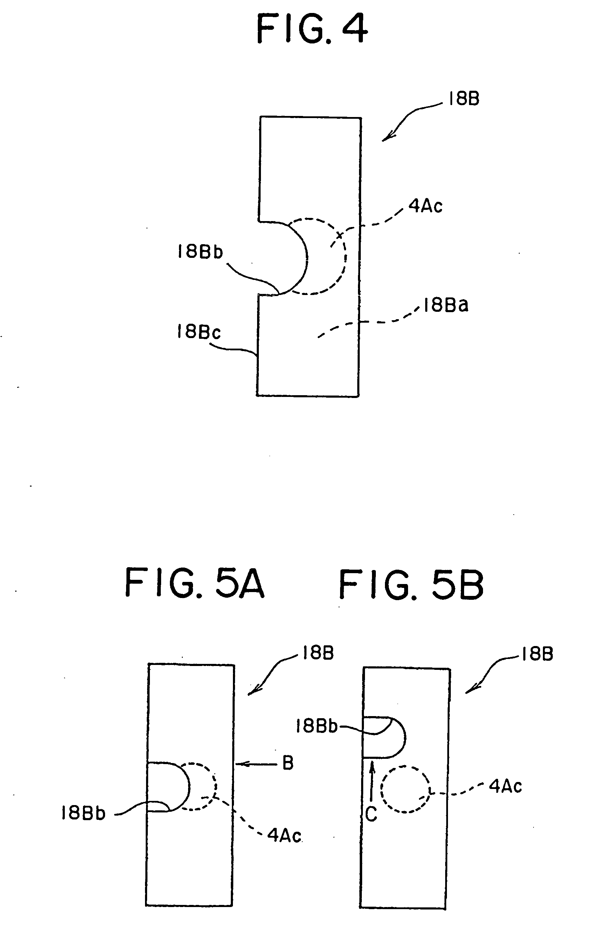

In the embodiment described above, the ring 18A is annular and is free from any notch and is fitted around the outer periphery of the pinion gears 4A, 4B by causing its thermal expansion. However, to further facilitate the assembly, the ring 18A may be provided with a notch. Such an embodiment will be described in detail with reference to Figs. 3 and 4. It is to be noted that components which are identical with those used in the first embodiment are designated by like characters as used before to omit a detailed description. As shown in Fig. 4, a ring 18B is formed with a notch 18Bb in a manner corresponding to the position where the pinion gears 4A, 4B received within the differential case 2 assumes circumferentially. In a differential gearing of two-pinion type as in the present embodiment, the notch 18Bb is formed at two locations which are symmetrically disposed by being 180° apart. The notch 18Bb is notched in the axial direction of the ring 18B from the end face 18Bc which is initially fitted (the left end face as viewed in Figs. 3 and 4) toward the pinion gear sliding surface 18Aa when the ring 18B which prevents the withdrawal of the pinion gear is fitted around the outer periphery of the differential case 2. In the embodiment shown in Fig. 4, the notch 18Bb is internally arcuate in configuration, and the end of the arc (deepest end) reaches substantially the center of a pinion gear sliding surface 18Ba (a portion shown in broken lines in Fig. 4 indicates a portion of the sliding surface 18Ba extending around the full periphery which is abutted by the external surface 4Ac of the pinion gear 4A actually). However, it is not always necessary that the notch be formed to this position, and it is sufficient that the notch be formed to allow the ring 18B to be fitted after the pinion gear 4A has been inserted into the differential case 2. It is also to be noted that it is preferable to form the notch 18Bb as small as possible if a fitting of the ring 18B is then permitted in order to secure the pinion gear sliding surface 18Ba. After the ring 18B has been fitted around the outer periphery of the pinion gears 4A, 4B, a suitable technique is used to lock the ring 18B against withdrawal.

As mentioned above, in the differential gearing for vehicle according to this embodiment, the ring 18B which prevents the withdrawal of the pinion gears 4A, 4B is formed with the notch 18Bb in a manner corresponding to the location of each pinion gear 4A, 4B, thus allowing the ring 18B to be fitted around the differential case 2 after the side gears 6L, 6R have been inserted into the differential case 2 and then the pinion gears 4A, 4B have been secured in position for meshing engagement with the side gears 6L, 6R, thus improving the assembly. In addition, in the present embodiment, the location of the notch 18Bb in the ring 18B is aligned with the position of each pinion gear 4A when it is fitted around the outer periphery of the differential case 2 and then secured in position, and accordingly, the location of the notch 18Bb can be maintained aligned with the position of the external surface 4Ac of the pinion gear, improving the heat dissipation from the external surface 4Ac of the pinion gear 4A and the sliding portion 18Ba of the ring 18B and improving the seizure resistance.

In the second embodiment, the location of the notch 18Bb formed in the ring 18B which prevents the withdrawal of the pinion gears 4A, 4B is aligned with the position of the pinion gears 4A, 4B carried within the differential case 2 when it is fitted and is then secured to the differential case 2. However, as shown in Figs. 5A and 5B, the ring 18B which prevents the withdrawal is fitted around the differential case 2 (refer arrow B) and then rotated (refer arrow C) to bring the location of the notch 18Bb offset from the position of the pinion gears 4A, 4B (the position of the external surface 4Ac on the pinion gear 4A). It is to be noted that after the ring 18B is fitted around the differential case 2 and is then rotated, it is necessary to lock the ring 18B against withdrawal. It is also necessary to lock the ring 18B against rotation in order to prevent it from being displaced in the rotational direction from the set position. In this manner, the sliding area between the spherical external surface 4Ac of the pinion gear 4A, 4B and the pinion gear sliding surface 18Ba can be increased in comparison to the second embodiment, thus reducing the abrasion and also reducing an aging change in the differential action limiting force.

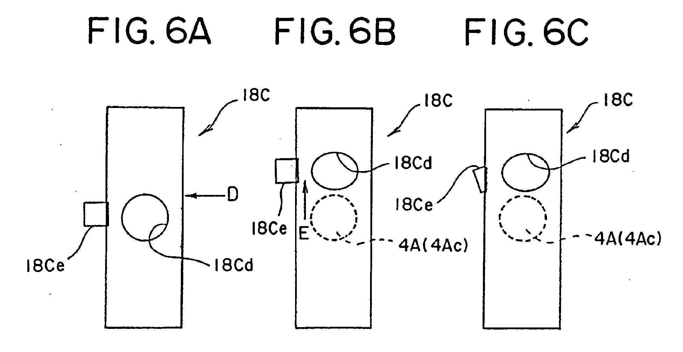

Figs. 6A to 6C is a view showing a ring 18C which prevents the withdrawal of a pinion gear in a differential gearing for vehicle 1 according to a fourth embodiment. In the second and the third embodiment, the notch 18Bb is formed on the forward side when the ring 18B is fitted around the differential case 2. However, in this embodiment, a circular opening 18Cd is formed in a manner corresponding to the positions of the pinion gears 4A, 4B which are disposed on a circumference of the differential case 2 and through which the pinion gears 4A, 4B can be passed.

In this embodiment, after the ring 18C is fitted around the differential case 2, the pinion gears 4A, 4B are inserted. Thus the ring 18C is fitted by aligning respective circular openings 18Cd formed therein in alignment with the positions of the pinion gear receiving openings 12A, 12B formed in the differential case 2 (refer arrow D). Subsequently, after inserting the respective pinion gears 4A, 4B through the circular opening 18Cd in the ring 18, the ring 18C is rotated (refer arrow E). For the case of the notch 18Bb, the ring 18B can be used in place which is reached by fitting it, but when the opening 18Cd is formed in the ring 18C, if it is left in place, the pinion gears 4A, 4B will be disengaged and withdrawn. Accordingly, it is necessary that the ring be rotated to have the circular opening 18Cd displaced from the position of the pinion gear 4A, 4B. To prevent the ring 18C from being rotated subsequently to return to the position of either pinion 4A, 4B, the ring 18C is locked against withdrawal and locked against rotation. In the present embodiment, the ring is locked against withdrawal and locked against rotation by folding a tab 18Ce which is formed on the end face of the ring 18C. It is obvious that the differential case 2 be formed with a corresponding groove. As means for locking the withdrawal preventing ring 18C against withdrawal, a pin or a screw may be inserted and secured in the end face of the differential case 2 which is located on the opposite side from the step 2Ca (refer Fig. 1). Alternatively a snap ring may be fitted on the opposite end face from the step 2Ca, or the end face which is opposite from the step 2Ca may be caulked and secured.

## Claims

1. A differential gearing for vehicle comprising a plurality of pinion gears rotatably held in pinion gear receiving openings formed in a differential case, and a pair of side gears disposed in right-angle meshing engagement with the pinion gears and connected to two axles which are disposed coaxially;
in which a ring which is coaxial with the differential case is fitted around the outer periphery of the pinion gears, the ring including an inner peripheral surface in which a spherical recess centered about a point of intersection between an axis of rotation of the side gear and an axis of rotation of the pinion gear is formed, an end of the pinion gear which is disposed toward the outer periphery thereof being formed with a spherical projection having a similar curvature as the recess in the inner peripheral surface of the ring.

2. A differential gearing for vehicle according to Claim 1 **characterized in that** the ring is formed with an axial notch at a location which corresponds to the pinion gear receiving opening, the arrangement being such that after the pinion gear is inserted into the pinion gear receiving opening, the ring is axially slid while aligning the notch with the position of the pinion gear to fit it around the outer periphery of the pinion gear.

3. A differential gearing for vehicle according to Claim 2 **characterized in that** after the ring is fitted around the outer periphery of the pinion gear, the ring is rotated relative to the differential case in a circumferential direction thereof and the ring is locked against rotation relative to the differential case.

4. A differential gearing for vehicle according to Claim 1 **characterized in that** the ring is formed with a diametrical opening at a location which corresponds to the pinion gear receiving opening, the arrangement being such that under a condition that the ring is fitted around the differential case while aligning the diametrical opening with the pinion gear receiving opening, the pinion gear is inserted into the pinion gear receiving opening, the ring is then rotated circumferentially relative to the differential case and is then locked against rotation relative to the differential case.
